# EUROPÄISCHE PATENTSCHRIFT

(11) **EP 2 590 280 B1**
(45) Veröffentlichungstag und Bekanntmachung des Hinweises auf die Patenterteilung: **27.06.2018**
(21) Anmeldenummer: 12306358.8
(22) Anmeldetag: 31.10.2012
(51) Int. Cl.: H02G 3/04, E04F 17/08, H02G 3/06, H02G 3/18

(54) **Bodenkanalsystem zur Leitungsführung und zum Geräteeinbau**
Floor channel system for conduit guidance and for device installation
Système de canal de sol pour le guidage de câble et le montage d'appareils

(30) Priorität: 02.11.2011 DE 202011107398 U
(43) Veröffentlichungstag der Anmeldung: 08.05.2013
(73) Patentinhaber: Tehalit GmbH, 67716 Heltersberg (DE)
(72) Erfinder: Broshart, Peter, 76764 Rheinzabern (DE); Vatter, Klaus, 66978 Clausen (DE); Schnurr, Richard, 66957 Vinningen (DE)
(74) Vertreter: Nuss, Laurent

(56) Entgegenhaltungen:
- DE-A1- 19 848 525
- DE-U- 6 602 215
- DE-U1- 9 003 119
- DE-U1- 20 113 696
- DE-U1- 20 313 160

## Beschreibung

Die vorliegende Erfindung betrifft ein Bodenkanalsystem zur Leitungsführung und zum Geräteeinbau.

Die moderne Büroarchitektur stellt besondere Ansprüche an die Elektroinstallation, da Wände, an denen ein Kabelkanalsystem angebracht werden könnte, zunehmend durch Glasfronten ersetzt werden. Dies macht die Installation eines Bodenkanals unumgänglich.

Bodenkanäle oder Brüstungskanäle für elektrotechnische Installationen ermöglichen eine Leitungsführung oder einen Geräteeinbau elektrischer Geräte im Unterboden, so dass das Kanalsystem unsichtbar ist. Ein wesentlicher Vorteil bei einem Kanalsystem im Unterboden besteht darin, dass Leitungen und Dosen in der Wand nicht mehr notwendig sind und somit die elektrischen Anschlüsse und Leitungen an den Platz geführt werden können, an dem sie gebraucht werden.

Eingelassen im Unterboden wird er entlang der Wände oder Fensterfronten geführt. Auf eine stabile Abdeckung oder einen Deckel lassen sich unterschiedliche Bodenbeläge aufbringen, beispielsweise Parkett, Laminat, Platten oder Teppichboden. Der Kanal wird dadurch nahezu vollständig unsichtbar und fügt sich nahtlos in das Raumdesign ein. An den Stellen, an denen Kabelauslässe oder Anschlüsse gewünscht sind, verfügt ein Bodenkanal über entsprechende Auslässe, die normalerweise in Form einer Bürstenleiste umgesetzt werden. Die Leitungen können über die Bürstenleiste an der Wandseite direkt in den Raum geführt werden.

Ein solcher Bodenkanal ist beispielsweise in der DE 20 2005 018 605 U1 beschrieben. Der Kanal besteht aus einem Unterteil mit U-förmigem Querschnitt, einem Boden und zwei Seitenwänden sowie wenigstens einem abnehmbaren Deckel. Der Deckel besitzt wenigstens einen kurzen Schenkel, und an der Seitenwand des Unterteils ist innen ein Steg vorgesehen. Das freie Ende des Stegs ist so geformt, dass der Schenkel des Deckels lösbar in das korrespondierend geformte Ende passt. Die Bürstenleiste zum Leitungsauslass ist mit dem Deckel verbunden. Der Bodenbelag wird auf den Deckel aufgelegt. Zur Anpassung der Bürstenleiste an einen auf dem Deckel aufliegenden Bodenbelag ist diese höhenverstellbar ausgeführt. Hinsichtlich unterschiedlicher Anforderungen in Bezug auf Leitungsführungs- und Geräteeinbau ist dieser Kanal jedoch nicht flexibel genug. Wird der Kanal beispielsweise in der Raummitte geführt, ist eine Bürstenleiste entbehrlich. Auch ist der Geräteeinbau wenig flexibel. Muss der Kanal um eine Ecke verlegt werden, so sind für das Inneneck und das Außeneck getrennte Flachwinkel erforderlich. Der Monteur muss daher mehrere Zubehörteile mit sich führen.

Ein anderes Kanalsystem ist beispielsweise in der DE 203 13 160 U1 beschrieben, bei dem ein im Bodenaufbau verlegbarer Kanal zur Leitungsführung und zum Geräteeinbau beschrieben ist, bei dem der Deckel einen seitlichen Überstand besitzt, der den Bodenaufbau überlappt. Ein Brüstungskanal für elektrotechnische Installationen mit einem im Wesentlichen U-förmigen Installationskanal und einem Abdeckteil, welches an dem Kanal gehaltert ist, vorzugsweise schwenkbar, ist in der DE 296 06 869 U1 beschrieben. Zwischen dem Abdeckteil und dem Installationskanal befindet sich ein Spalt zum Auslass von elektrischen Anschlussleitungen. Der Installationskanal ist in Einbausolllage mit im Wesentlichen horizontal gerichteter Basis und vertikal nach oben gerichteten Schenkeln angeordnet. Weitere Brüstungskanäle dieser Art sind z. B. in EP 0 758 809 B1, DE 200 10 253 U1, DE 66 02 215 U, DE 201 13 696 U1, DE 198 48 525 A1 und DE 90 03 119 U1 beschrieben.

Der vorliegenden Erfindung liegt daher die Aufgabe zugrunde, ein Bodenkanalsystem anzugeben, das dem Monteur in seinen unterschiedlichen Ausführungsvarianten die größtmögliche Flexibilität bietet und bei dem zugleich die Montage gegenüber bekannten Kanalsystemen für verschiedene Montagesituationen erleichtert wird.

Diese Aufgabe wird gelöst durch ein Bodenkanalsystem mit den Merkmalen des Anspruchs 1. Bevorzugte Ausführungsformen finden sich in den Unteransprüchen wieder.

Das erfindungsgemäße Bodenkanalsystem besteht aus einem U-förmigen Kanalunterteil mit Seitenwänden, einem Boden und seitlichen Deckelhalteprofilen. Die Deckelhalteprofile dienen der Auflage und dem Halt des Deckels (Oberteil oder Abdeckung). Ein abnehmbarer Deckel deckt das Innere des Kanalunterteils je nach Montagesituation wenigstens teilweise oder vollständig ab. Zur Abstützung des Oberteils und ggf. zur Befestigung von Elektroinstallationsgeräten befindet sich am Boden des Kanalunterteils eine lösbar befestigte und versetzbare Systemträgerleiste. Diese ersetzt die herkömmliche C-Schiene. Die Systemträgerleiste ist in unterschiedliche Positionen am Kanalunterteil steckbar. Hierfür befinden sich am Kanalboden gegenüber dem Kanalboden abstehende Laschen, an die die Systemträgerleiste befestigbar ist. Hinsichtlich des Geräteeinbaus erhält man dadurch die größtmögliche Flexibilität bei zugleich erleichtertem Montagezugang zu den Geräten.

Das erfindungsgemäße Bodenkanalsystem besteht ferner aus wenigstens einer seitlich an der Kanalinnenseite der Seitenwände des Kanalunterteils befestigten Belagsleiste zum Abschluss für einen Bodenbelag, beispielsweise Parkett, Laminat, Platten oder Teppichboden. Die seitliche Belagsleiste ist zwischen dem Deckelhalteprofil und der Seitenwand des Kanalunterteils angeordnet und gegenüber der Seitenwand des Kanalunterteils höhenverstellbar. Dadurch kann die Belagsleiste an die unterschiedlichen Höhen des Bodenbelags angepasst werden. Dadurch ist eine Nivellierung des Bodenbelags mit der Belagsleiste möglich, eine Spaltbildung wird verhindert.

Vorzugsweise ist an der Unterseite des Deckels wenigstens eine Verschiebesicherungsleiste angebracht, die sich seitlich gegen ein Deckelhalteprofil abstützt. Dadurch wird zum einen der Deckel in fester Position gehalten, ein Verschieben wird verhindert. Gleichzeitig sichert die Verschiebesicherungsleiste auch eine Erdungsfunktion, um einen Potentialausgleich zwischen Kanalunterteil und dem Deckel zu ermöglichen.

Zum Leitungsauslass ist erfindungsgemäß eine Auslassbürste vorgesehen, die mittels einer eigens dafür vorgesehenen Bürstenträgerleiste in unterschiedlichen Positionen am Kanalunterteil befestigbar ist. Das erfindungsgemäße Bodenkanalsystem kann dadurch in verschiedenen Montagesituationen eingesetzt und in verschiedenen Ausführungsvarianten umgesetzt werden. Die Belagsleiste ist vorzugsweise zur Raumseite am Kanalunterteil angeordnet, während die Auslassbürste zur Wandseite von einer mit dem Kanalunterteil verbundenen Bürstenträgerleiste gehalten wird. Die Bürstenträgerleiste ist mit der Auslassbürste gegenüber der Seitenwand des Kanalunterteils höhenverstellbar ausgestaltet. Gegenüber der Bürstenträgerleiste verläuft parallel eine höhenverstellbare Anschlagsleiste, die zwischen dem Deckel und der Auslassbürste angeordnet ist. Zur Anpassung an den jeweiligen Bodenbelag sind die Belagsleiste, die Bürstenträgerleiste und/oder die Anschlagsleiste über darin eingearbeitete Langlöcher zur Positionierung und anschließenden Verschraubung höhenverstellbar ausgeführt. Die Langlöcher ermöglichen eine stufenlose Höhenpositionierung der einzelnen Leisten und Anpassung an den Bodenbelag.

In einer Ausführungsvariante wird der Bodenkanal mit einem Anzeigemittel ausgestattet, beispielsweise einem Farbband, einem Leuchtmittel oder einer Leuchtschnur, insbesondere einer LED-Beleuchtung. Bei dieser Ausführungsvariante ist an der Bürstenträgerleiste eine längliche Kammer zur Aufnahme des Anzeigemittels ausgebildet. Dadurch kann eine streifenförmige, durchgehende oder punktuelle Beleuchtung entlang des Kanals erfolgen. Vorzugsweise erfolgt eine Beleuchtung parallel zur Auslassbürste.

Das Fußende der Auslassbürste wird von der Bürstenträgerleiste vorzugsweise mittels eines U-förmigen Klemmprofils gehalten.

Entsprechend den einzelnen Ausführungsvarianten ist die Systemträgerleiste in unterschiedliche Positionen versetzbar. In einer ersten Ausführungsvariante wird das Kanalsystem mit einem durchgehenden Deckel abgedeckt. Bei dieser Ausführungsvariante ist keine Auslassbürste vorgesehen. Diese wird beispielsweise bei einer Verlegung der Leitungen in der Raummitte eingesetzt.

Ist ein zusätzlicher Geräteeinbau vorgesehen, so wird der durchgehende Deckel durch einen etwas kleineren Deckel mit einer zusätzlichen Auslassbürste ersetzt, die in erfindungsgemäßer Weise über die Bürstenträgerleiste mit dem Kanalunterteil höhenverstellbar verbunden ist. Die Systemträgerleiste wird wandseitig montiert, so dass ausreichend Platz für den Geräteeinbau zur Verfügung steht. Zugleich hat der Monteur einen erleichterten Zugang für die Installation der Elektroninstallationsgeräte und deren Anschlüsse.

Soll die Bürstenträgerleiste zusätzlich mit einem Anzeigemittel, beispielsweise einer LED-Beleuchtung ausgestattet werden, so ist hierfür eine Bürstenträgerleiste vorgesehen, die mit einer zusätzlichen Kammer zur Führung des Anzeigemittels ausgestattet ist. In diesem Fall wird die Auslassbürste weiter zur Kanalmitte versetzt angeordnet werden müssen. Um die Vorteile der erfindungsgemäßen Systemträgerleiste nutzen zu können, wird diese über die am Boden des Kanalunterteils ausgebildeten Laschen weiter nach innen versetzt. Dadurch wird der Abstand zwischen Systemträgerleiste und der Innenwand der Seitenwand des Kanalunterteils vergrößert.

Die drei Ausführungsvarianten (Ausführungsvariante mit durchgehendem Deckel, Ausführungsvariante mit teilweise geschlossenem Deckel und Auslassbürste, Ausführungsvariante mit teilweise geschlossenem Deckel und Auslassbürste und Führung eines Anzeigemittels parallel zur Auslassbürste) ermöglichen die größtmögliche Flexibilität mit wenigen Bauteilen bei der Montage.

Die Systemträgerleiste wird vorzugsweise unter gegenüber dem Boden des Kanalunterteils leicht abstehenden Laschen geklemmt, die am Boden des Kanalunterteils ausgebildet sind. Von diesen Laschen wird die Systemträgerleiste gehalten. Zur Einführung der Laschen sind vorzugsweise Aussparungen am Fußstück der Systemträgerleiste vorgesehen.

Zur Verbindung zweier aufeinander stoßender Kabelkanalabschnitte ist vorzugsweise ein Kupplungselement vorgesehen, das über daran stirnseitig ausgebildeten Laschen an dem Boden am Ende des Kanalunterteils aufsteckbar ist. Vorzugsweise besitzt das Kupplungselement an wenigstens einer Seite eine Seitenwand mit einem darin angebrachten Langloch. Dadurch kann das Kupplungselement in verschiedenen Positionen aufgesteckt und anschließend mit dem Kanalunterteil verschraubt werden.

Das Ende des Kanalsystems bildet eine Endplatte, die über daran ausgebildeten Laschen an den Boden am Ende des Kanalunterteils aufsteckbar ist. Vorzugsweise befinden sich an der Endplatte ebenso wie am Kanalunterteil selbst Durchtrittsöffnungen für Rohre oder Leitungen, die beispielsweise von einer Wandmontage stammen. Vorzugsweise ist die Endplatte an den Bodenbelag über eine höhenverstellbare Belagskante anpassbar. Auch hier erfolgt die Höhenpositionierung über ein Langloch.

Zur Führung des Kanalsystems über Eck ist ein Flachwinkel vorgesehen, der jedoch sowohl als Inneneck als auch als Außeneck eingesetzt werden kann. Bislang waren hierfür unterschiedliche Flachwinkel erforderlich. Ermöglicht wird eine Innen- und Außeneckmontage dadurch, dass die Systemträgerleiste beidseitig über am Boden des Kanalunterteils ausgebildete Laschen in verschiedene Positionen steckbar ist. Der Monteur kann also bei der Montage einen Flachwinkel entweder zur Inneneck- oder Außeneckmontage einsetzen.

Vorzugsweise befinden sich an der Oberseite der Seitenwände des Kanalunterteils kleine Kerben, welche die Positionen zur Verschraubung der einzelnen höhenverstellbaren Leisten markieren.

Das erfindungsgemäße Bodenkanalsystem zeichnet sich dadurch aus, dass neben dem Bodenkanal auch eine Sockelleiste montierbar ist. Ermöglicht wird dies durch die in unterschiedliche Positionen versetzbare Auslassbürste. Dadurch können auch bei Anbringen einer Sockelleiste im Unterbodenbereich Kabel aus dem Kanalinneren nach außen oder umgekehrt geführt werden.

Die Erfindung wird in den nachfolgenden Zeichnungen näher erläutert. Es zeigen
Fig. 1 eine erste Ausführungsvariante mit einem durchgehenden Deckel, der auf dem Kanalunterteil aufliegt;
Fig. 2 eine zweite Ausführungsvariante, die zur Wandseite mit einer durchgehenden Auslassbürste ausgestattet ist;
Fig. 3 eine dritte Ausführungsvariante, bei der die Auslassbürste zur Kanalmitte versetzt ist;
Fig. 4 ein erfindungsgemäßes Kupplungselement zur Verbindung aufeinander stoßender Kabelkanalabschnitte;
Fig. 5 eine erfindungsgemäße Endplatte zum Abschluss des Kanalsystems;
Fig. 6 einen erfindungsgemäßen Flachwinkel zur Eckmontage.

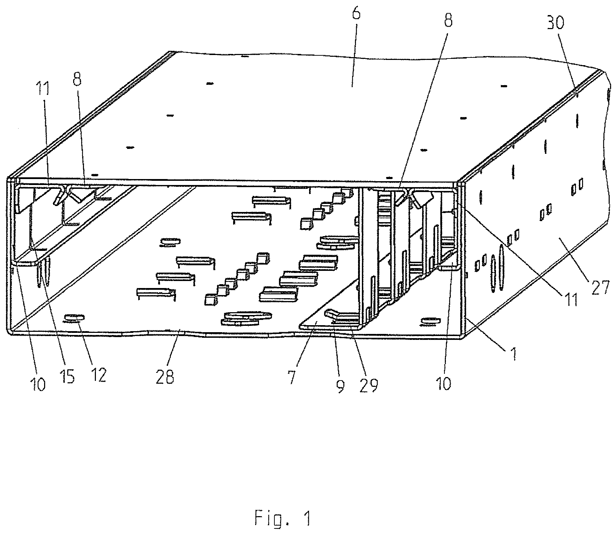

In Fig. 1 ist eine erste Ausführungsvariante des erfindungsgemäßen Bodenkanalsystems gezeigt. Das Kanalunterteil 1 besteht aus einem Boden 28 sowie zwei seitlichen Seitenwänden 27, die dem Kanalunterteil 1 eine U-Form verleihen. Am Boden 28 des Kanalunterteils 1 ist eine Systemträgerleiste 7 angeordnet. Die Systemträgerleiste 7 dient der Abstützung des Deckels 6. Die Systemträgerleiste 7 kann in unterschiedliche Positionen versetzt werden und wird über am Boden 28 ausgebildete Laschen 9 gehalten. Die Laschen 9 werden am Boden des Kanalunterteils 1 geführt. Zur Nivellierung des Bodenkanals im Unterboden sind Nivellierschrauben vorgesehen, die über entsprechende Gewindeöffnungen 12 verschraubbar sind.

Auf den Kanalunterteil wird ein Deckel 6 aufgesetzt. Dieser wird von Deckelhalteprofilen 11 gehalten und über eine Verschiebesicherungsleiste 8, die sich gegen die Deckelhalteprofile 11 abstützt, verklemmt. Zwischen den Deckelhalteprofilen 11 und der Verschiebesicherungsleiste 8 besteht ein elektrischer Kontakt zum Potentialausgleich, so dass der Verschiebesicherungsleiste 8 zugleich eine Erdungsfunktion zukommt.

Auf den Deckel 6 können unterschiedliche Bodenbeläge aufgebracht werden, beispielsweise Laminat, Parkett, Platten, Teppichboden. Zur Begrenzung sind seitliche Belagsleisten 10 vorgesehen, die seitlich an der Kanalinnenseite einer Seitenwand 27 des Kanalunterteils 1 angeordnet sind. Die Belagsleiste 10 wird entlang der Seitenwand 27 des Kanalunterteils 1 nach oben geführt. Zur Befestigung dient ein Langloch 15, in dem eine Verschraubung mit der Seitenwand 27 des Kanalunterteils 1 erfolgt. In der gezeigten Ausführungsvariante sind zwei Belagsleisten 10 links- und rechtsseitig gezeigt. Die gezeigte Ausführungsvariante dient zur Führung der Kabel und Leitungen im Kanalinneren und wird zur Leitungsführung, beispielsweise in der Raummitte, eingesetzt.

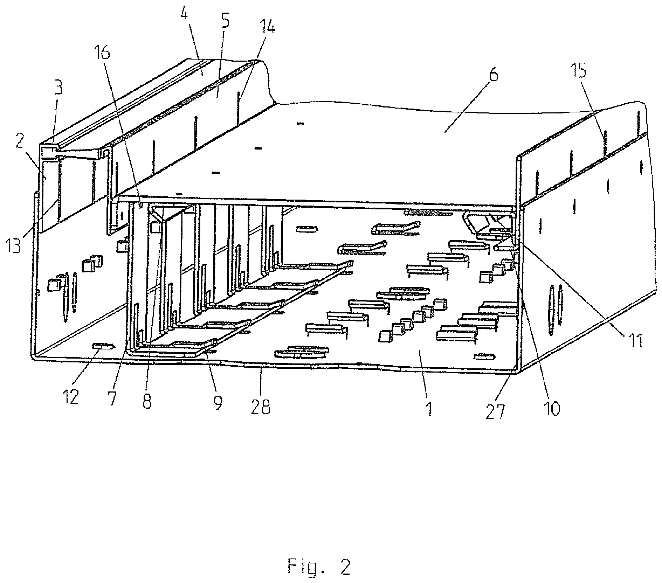

In Fig. 2 ist eine zweite Ausführungsvariante gezeigt, bei der Kabeldurchlässe über eine Auslassbürste 4 vorgesehen sind. Die Auslassbürste 4 ist an einer Bürstenträgerleiste 2 befestigt. Die Befestigung erfolgt über das Fußende der Auslassbürste 4, das von der Bürstenträgerleiste 2 mittels eines U-förmigen Klemmprofils 3 gehalten wird. Die Bürstenträgerleiste 2 ist über Langlöcher 13 höhenverstellbar. Die Belagsleiste 10 ist gegenüber der Bürstenträgerleiste 2 unabhängig höhenverstellbar. Auf diese Weise ist eine bestmögliche Anpassung an den jeweiligen Bodenbelag möglich. In der gezeigten Ausführungsvariante ist rechtsseitig zur Raummitte die Belagsleiste 10 zu erkennen. Zur Wandseite ist eine eigene Anschlagsleiste 5 mit Langlöchern 14 vorgesehen, welche an der Oberseite einen U-förmigen Schenkel aufweist. Die Systemträgerleiste 7 ist in einer ersten Position am Boden 28 des Kanalunterteils 1 befestigt.

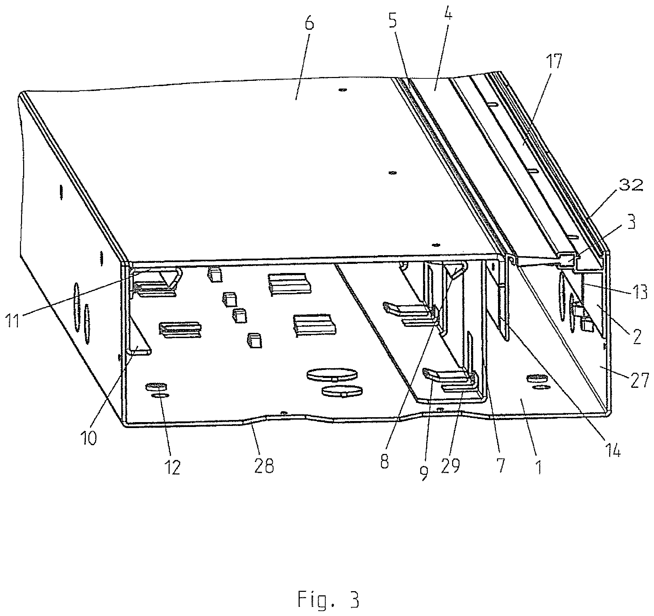

In Fig. 3 erkennt man eine dritte Ausführungsvariante, bei der die Systemträgerleiste 7 weiter nach Innen zur Kanalmitte versetzt ist. Dadurch wird der Abstand zwischen Systemträgerleiste 7 und Seitenwand 27 des Kanalunterteils 1 vergrößert. Dies hat den Vorteil, dass die Auslassbürste 4 ebenfalls weiter zur Kanalmitte orientiert ist. In der gezeigten Ausführungsvariante besitzt die Bürstenträgerleiste 2 eine zusätzliche Kammer 17, in der ein Anzeigemittel, beispielsweise ein Leuchtmittel, eine Leuchtschnur, eine LED-Beleuchtung oder auch ein Farbband eingesetzt werden kann. Das Fußende der Auslassbürste 4 wird über ein U-förmiges Klemmprofil 3 gehalten. Im Gegensatz zu bekannten Lösungen ist die Auslassbürste 4 nicht mit dem Deckel 6 selbst, sondern über die Bürstenträgerleiste 2 mit dem Kanalunterteil 1 höhenverstellbar verbunden. Die gezeigte Ausführungsvariante ermöglicht zudem das Anbringen einer Sockelleiste, ohne dass der Kabelauslass über die Auslassbürste 4 beeinträchtigt werden würde. Die Belagsleiste 10, die Anschlagsleiste 5 und die Bürstenträgerleiste 2 werden über entsprechende Langlöcher 14, 15, 13 mit dem Kanalunterteil 1 verschraubt. Um die Schraubposition für den Monteur anzuzeigen, sind an der Oberseite der Seitenwand 27 des Kanalunterteils 1 entsprechende Kerben 32 ausgebildet. Dadurch kann der Monteur die Verschraubungsposition leichter finden.

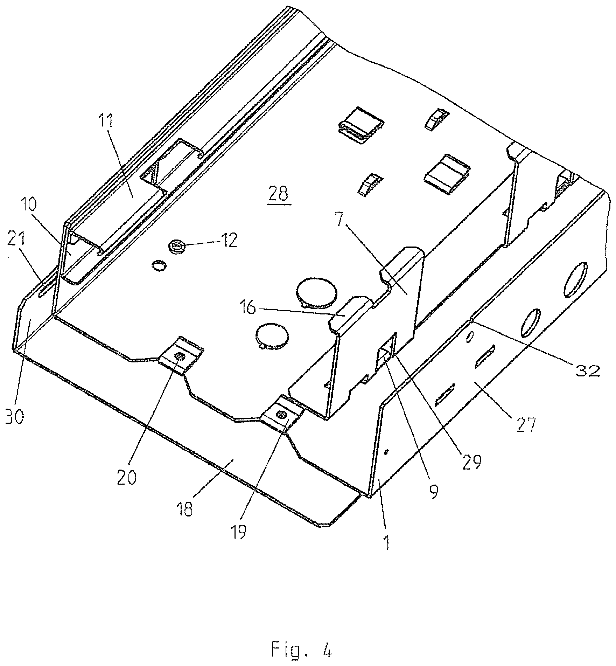

In Fig. 4 ist ein Kupplungselement 18 gezeigt, das zur Verbindung zwei aufeinander stoßender Kabelkanalabschnitte vorgesehen ist. Das Kupplungselement 18 wird über Laschen 19 mit dem Boden 28 des Kanalunterteils 1 verbunden und über Öffnungen 20 verschraubt. Auf einer Seite ist eine Seitenwand 30 mit einem Langloch 21 vorgesehen. Die Systemträgerleiste 7 besitzt horizontale Auflageflächen 16 zur Aufnahme des Deckels 6 (nicht gezeigt) sowie Aussparungen 29 am Fußende, die zur Aufnahme der am Boden 28 des Kanalunterteils 1 ausgebildeten Laschen 9 dienen.

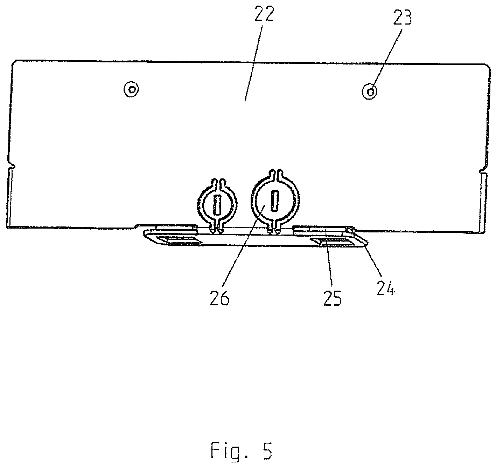

In Fig. 5 ist eine Endplatte 22 zum stirnseitigen Abschluss des Kanalsystems gezeigt. Die Endplatte 22 wird über Laschen 25, die an einer Fußmatte 24 ausgebildet sind, am Boden 28 des Kanalunterteils 1 befestigt. Eine höhenverstellbare Belagskante ermöglicht eine Anpassung an den jeweiligen Bodenbelag. Eine Verschraubung erfolgt über eine entsprechende Öffnung 23. Zugleich sind Durchtrittsöffnungen 26, beispielsweise für eintretende Rohre und Leitungen, vorgesehen.

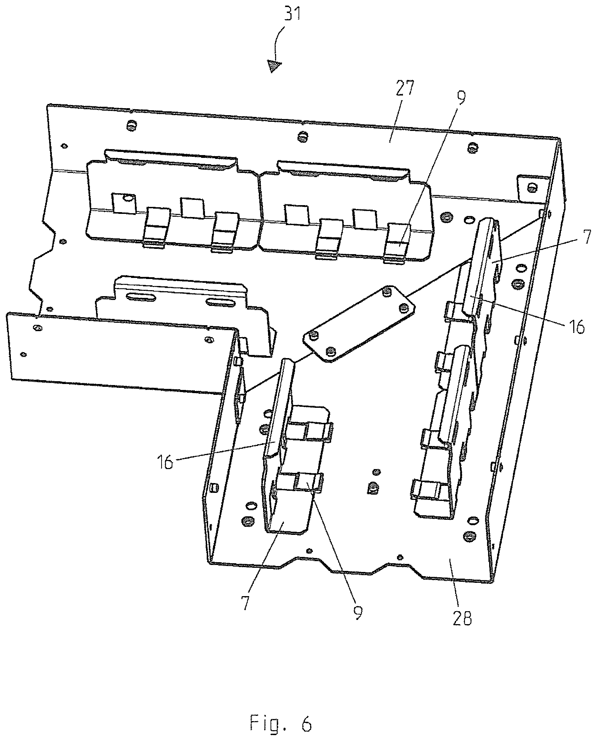

In Fig. 6 ist für eine Eckmontage ein Flachwinkel 31 gezeigt. Der erfindungsgemäße Flachwinkel 31 kann sowohl für eine Montage als Inneneck als auch für die Montage als Außeneck eingesetzt werden. Ermöglicht wird dies über die versetzbaren Systemträgerleisten 7, die entsprechend der Montageanforderung in unterschiedliche Positionen einbaubar sind.

Das erfindungsgemäße Bodenkanalsystem ermöglicht über die verschiedenen Ausführungsvarianten die komplette Ausstattung eines Büroraumes mit einem Bodenkanal. Vorteilhaft ist insbesondere, dass mit wenigen Bauteilen eine komplette Kanalmontage ermöglicht wird und dass verschiedene Anforderungen hinsichtlich der Bereitstellung von Anschlüssen und Elektroinstallationsgeräten mit einem einzigen Kanalsystem berücksichtigt werden können. Zur Raummitte wird ein Kanalabschnitt eingesetzt werden, bei dem das Kanalunterteil vollständig mit dem Kanaloberteil (Deckel) abgedeckt ist. Müssen Anschlüsse für Elektroinstallationseinrichtungen bereitgestellt werden, so erfolgt die Montage mit einer Auslassbürstenleiste, die entsprechend der Anforderung zur Kanalmitte über die erfindungsgemäße Bürstenträgerleiste im Bedarfsfall versetzbar ist. Höhenverstellbare Belagsleisten, Anschlagsleisten, Bürstenträgerleisten ermöglichen eine optimale Nivellierung an den jeweils verwendeten Bodenbelag. Der Geräteeinbau und der Gerätezugang werden über versetzbare Systemträgerleisten zudem erheblich erleichtert.

## Patentansprüche

1. Bodenkanalsystem, bestehend aus
- einem U-förmigen Kanalunterteil (1) mit Seitenwänden (27), einem Boden (28) und seitlichen Deckelhalteprofilen (11),
- einem abnehmbaren Deckel (6), der das Innere des Kanalunterteils (1) wenigstens teilweise oder vollständig abdeckt und von den Deckelhalteprofilen (11) gehalten wird,
- einer am Boden (28) des Kanalunterteils (1) lösbar befestigten Systemträgerleiste (7) zur Abstützung des Oberteils und ggf. zur Befestigung von Elektroinstallationsgeräten, **dadurch gekennzeichnet, dass**
- wenigstens einer seitlich an der Kanalinnenseite der Seitenwände (27) des Kanalunterteils (1) befestigten Belagsleiste (10) als Abschluss eines Bodenbelags vorgesehen ist und **dadurch gekennzeichnet, dass** die wenigstens eine seitliche Belagsleiste (10) zwischen dem Deckelhalteprofil (11) und der Seitenwand (27) des Kanalunterteils (1) angeordnet und gegenüber der Seitenwand (27) des Kanalunterteils (1) höhenverstellbar ist, wobei die Belagsleite (10) über darin eingearbeitete Langlöcher (15) zur Positionierung und Verschraubung höhenverstellbar gemacht ist.

2. Bodenkanalsystem nach Anspruch 1, **dadurch gekennzeichnet, dass** an der Unterseite des Deckels (6) wenigstens eine Verschiebesicherungsleiste (8) angebracht ist, die sich seitlich gegen ein Deckelhalteprofil (11) abstützt.

3. Bodenkanalsystem nach Anspruch 1 oder 2, **dadurch gekennzeichnet, dass** die Belagsleiste (10) zur Raumseite am Kanalunterteil (1) angeordnet ist und zur Wandseite eine Auslassbürste (4) von einer mit dem Kanalunterteil (1) verbundenen Bürstenträgerleiste (2) gehalten wird, wobei die Bürstenträgerleiste (2) mit der Auslassbürste (4) gegenüber der Seitenwand (27) des Kanalunterteils (1) höhenverstellbar ist.

4. Bodenkanalsystem nach Anspruch 3, **dadurch gekennzeichnet, dass** zwischen dem Deckel (6) und der Auslassbürste (4) eine gegenüber dem Deckel (6) höhenverstellbare Anschlagsleiste (5) angeordnet ist.

5. Bodenkanalsystem nach Anspruch 3, **dadurch gekennzeichnet, dass** die Bürstenträgerleiste (2) und/oder die Anschlagsleiste (5) über darin eingearbeitete Langlöcher (15, 13, 14) zur Positionierung und Verschraubung höhenverstellbar gemacht sind.

6. Bodenkanalsystem nach Anspruch 3, **dadurch gekennzeichnet, dass** an der Bürstenträgerleiste (2) eine Kammer (17) zur Aufnahme eines Anzeigemittels ausgebildet ist.

7. Bodenkanalsystem nach Anspruch 6, **dadurch gekennzeichnet, dass** es sich bei dem Anzeigemittel um ein Farbband, ein Leuchtmittel oder eine Leuchtschnur handelt.

8. Bodenkanalsystem nach Anspruch 3, **dadurch gekennzeichnet, dass** das Fußende der Auslassbürste (4) von der Bürstenträgerleiste (2) mittels eines U-förmigen Klemmprofils (3) gehalten wird.

9. Bodenkanalsystem nach einem der vorhergehenden Ansprüche, **dadurch gekennzeichnet, dass** die Systemträgerleiste (7) unter gegenüber dem Boden (28) des Kanalunterteils (1) leicht abstehenden Laschen (9), die am Boden (28) des Kanalunterteils (1) ausgebildet sind, geklemmt und von diesen gehalten wird.

10. Bodenkanalsystem nach Anspruch 9, **dadurch gekennzeichnet, dass** das Fußstück der Systemträgerleiste (7) Aussparungen (29) für die Laschen (9) aufweist.

11. Bodenkanalsystem nach einem der vorhergehenden Ansprüche, **dadurch gekennzeichnet, dass** zur Verbindung zweier aufeinanderstoßender Kabelkanalabschnitte ein Kupplungselement (18) vorgesehen ist, das über daran stirnseitig ausgebildeten Laschen (19) an den Boden (28) am Ende des Kanalunterteils (1) aufsteckbar ist.

12. Bodenkanalsystem nach Anspruch 11, **dadurch gekennzeichnet, dass** das Kupplungselement (18) an wenigstens einer Seite eine Seitenwand (30) mit einem darin eingebrachten Langloch (21) aufweist.

13. Bodenkanalsystem nach einem der vorhergehenden Ansprüche, **dadurch gekennzeichnet, dass** das Ende des Kanalsystems mit einer Endplatte (22) abgeschlossen wird, die über daran ausgebildeten Laschen (25) an den Boden (28) am Ende des Kanalunterteils (1) aufsteckbar und über eine höhenverstellbare Belagskante an den Bodenbelag anpassbar ist.

14. Bodenkanalsystem nach einem der vorhergehenden Ansprüche, **dadurch gekennzeichnet, dass** als Inneneck und Außeneck ein Flachwinkel (31) vorgesehen ist, bei dem die Systemträgerleiste (7) beidseitig über am Boden (28) des Kanalunterteils (1) ausgebildeten Laschen (9) in verschiedene Positionen steckbar ist.

15. Bodenkanalsystem nach einem der vorhergehenden Ansprüche, **dadurch gekennzeichnet, dass** an der Oberseite der Seitenwand (27) des Kanalunterteils (1) Kerben (32) zur Markierung für die Verschraubung der höhenverstellbaren Leisten (10, 2, 5) eingebracht sind.

## Claims

1. Floor channel system, comprising
- a U-shaped channel lower part (1) with side walls (27), a bottom (28) and lateral cover holding profiles (11),
- a removable cover (6) which at least partially or completely covers the interior of the channel lower part (1) and is held by the cover holding profiles (11),
- a system carrier strip (7) which is releasably fastened to the bottom (28) of the channel lower part (1) and is intended for supporting the upper part and, where appropriate, for fastening electric installation devices,
**characterized in that**
- there is provided at least one floor-covering strip (10) as a termination of a floor covering, which floor-covering strip is fastened laterally to the channel inner side of the side walls (27) of the channel lower part (1), and **characterized in that** the at least one lateral floor-covering strip (10) is arranged between the cover holding profile (11) and the side wall (27) of the channel lower part (1) and is height-adjustable with respect to the side wall (27) of the channel lower part (1), wherein the floor-covering strip (10), by means of slots (15) incorporated therein, is made height-adjustable for positioning and screwing.

2. Floor channel system according to Claim 1, **characterized in that** at least one displacement-preventing strip (8) is mounted on the underside of the cover (6) and is supported laterally against a cover holding profile (11).

3. Floor channel system according to Claim 1 or 2, **characterized in that** the floor-covering strip (10) is arranged, to the room side, on the channel lower part (1) and, to the wall side, an outlet brush (4) is held by a brush carrier strip (2) connected to the channel lower part (1), wherein the brush carrier strip (2) with the outlet brush (4) is height-adjustable with respect to the side wall (27) of the channel lower part (1).

4. Floor channel system according to Claim 3, **characterized in that** a stop strip (5) which is height-adjustable with respect to the cover (6) is arranged between the cover (6) and the outlet brush (4).

5. Floor channel system according to Claim 3, **characterized in that** the brush carrier strip (2) and/or the stop strip (5), by means of slots (15, 13, 14) incorporated therein, are or is made height-adjustable for positioning and screwing.

6. Floor channel system according to Claim 3, **characterized in that** a chamber (17) for receiving an indicator means is formed on the brush carrier strip (2).

7. Floor channel system according to Claim 6, **characterized in that** the indicator means is a colour ribbon, a luminaire or a light cord.

8. Floor channel system according to Claim 3, **characterized in that** the foot end of the outlet brush (4) is held by the brush carrier strip (2) by means of a U-shaped clamping profile (3).

9. Floor channel system according to one of the preceding claims, **characterized in that** the system carrier strip (7) is clamped under and held by tabs (9) which project slightly with respect to the bottom (28) of the channel lower part (1) and which are formed on the bottom (28) of the channel lower part (1).

10. Floor channel system according to Claim 9, **characterized in that** the foot piece of the system carrier strip (7) has cutouts (29) for the tabs (9) .

11. Floor channel system according to one of the preceding claims, **characterized in that**, in order to connect two abutting cable channel portions, there is provided a coupling element (18) which, by means of tabs (19) formed on the end side thereof, can be plugged onto the bottom (28) at the end of the channel lower part (1).

12. Floor channel system according to Claim 11, **characterized in that** the coupling element (18) has, on at least one side, a side wall (30) with a slot (21) incorporated therein.

13. Floor channel system according to one of the preceding claims, **characterized in that** the end of the channel system is closed off by an end plate (22) which, by means of tabs (25) formed therein, can be plugged onto the bottom (28) at the end of the channel lower part (1) and can be adapted to the floor covering by means of a height-adjustable floor-covering edge.

14. Floor channel system according to one of the preceding claims, **characterized in that** there is provided, as an inner corner and outer corner, a shallow angle (31) in which the system carrier strip (7) can be plugged on both sides in different positions by means of tabs (9) formed on the bottom (28) of the channel lower part (1).

15. Floor channel system according to one of the preceding claims, **characterized in that** notches (32) for marking for the screwing of the height-adjustable strips (10, 2, 5) are incorporated on the upper side of the side wall (27) of the channel lower part (1).

## Revendications

1. Système de canal de sol, constitué
- d'une partie inférieure de canal (1) en forme de U avec des parois latérales (27), un fond (28) et des profilés latéraux de maintien de couvercle (11),
- d'un couvercle amovible (6) qui recouvre au moins partiellement ou complètement l'intérieur de la partie inférieure de canal (1) et est maintenu par les profilés de maintien de couvercle (11),
- d'un rail support de systèmes (7) fixé de manière détachable sur le fond (28) de la partie inférieure de canal (1) pour soutenir la partie supérieure et, le cas échéant, pour fixer des appareils d'installation électrique,
**caractérisé en ce**
- **qu'**au moins un rail de revêtement (10) fixé latéralement sur le côté intérieur de canal des parois latérales (27) de la partie inférieure de canal (1) est prévu en tant que terminaison d'un revêtement de sol, et **caractérisé en ce que** ledit au moins un rail de revêtement latéral (10) est disposé entre le profilé de maintien de couvercle (11) et la paroi latérale (27) de la partie inférieure de canal (1) et est réglable en hauteur par rapport à la paroi latérale (27) de la partie inférieure de canal (1), le rail de revêtement (10) étant rendu réglable en hauteur par des trous oblongs (15) ménagés dans celui-ci pour son positionnement et son vissage.

2. Système de canal de sol selon la revendication 1, **caractérisé en ce qu'**au moins un rail de blocage de déplacement (8) est monté sur la face inférieure du couvercle (6), lequel s'appuie latéralement contre un profilé de maintien de couvercle (11).

3. Système de canal de sol selon la revendication 1 ou 2, **caractérisé en ce que** le rail de revêtement (10) est disposé vers le côté pièce sur la partie inférieure de canal (1) et une brosse de sortie (4) est maintenue vers le côté mur par un rail support de brosse (2) relié à la partie inférieure de canal (1), le rail support de brosse (2) muni de la brosse de sortie (4) étant réglable en hauteur par rapport à la paroi latérale (27) de la partie inférieure de canal (1).

4. Système de canal de sol selon la revendication 3, **caractérisé en ce qu'**un rail de butée (5) réglable en hauteur par rapport au couvercle (6) est disposé entre le couvercle (6) et la brosse de sortie (4).

5. Système de canal de sol selon la revendication 3, **caractérisé en ce que** le rail support de brosse (2) et/ou le rail de butée (5) sont rendus réglables en hauteur par des trous oblongs (15, 13, 14) ménagés dans ceux-ci pour leur positionnement et leur vissage.

6. Système de canal de sol selon la revendication 3, **caractérisé en ce qu'**une chambre (17) destinée à recevoir un moyen indicateur est formée sur le rail support de brosse (2).

7. Système de canal de sol selon la revendication 6, **caractérisé en ce que** le moyen indicateur est une bande de couleur, un moyen d'éclairage ou un cordon lumineux.

8. Système de canal de sol selon la revendication 3, **caractérisé en ce que** l'extrémité côté pied de la brosse de sortie (4) est maintenue par le rail support de brosse (2) au moyen d'un profilé de serrage (3) en forme de U.

9. Système de canal de sol selon l'une des revendications précédentes, **caractérisé en ce que** le rail support de systèmes (7) est serré sous des languettes (9) légèrement en saillie par rapport au fond (28) de la partie inférieure de canal (1), qui sont formées sur le fond (28) de la partie inférieure de canal (1), et maintenu par celles-ci.

10. Système de canal de sol selon la revendication 9, **caractérisé en ce que** la partie pied du rail support de systèmes (7) présente des évidements (29) pour les languettes (9).

11. Système de canal de sol selon l'une des revendications précédentes, **caractérisé en ce qu'**un élément d'accouplement (18) est prévu pour relier deux sections de canal de câbles jointives, lequel, au moyen de languettes (19) formées sur sa face frontale, peut être emboîté sur le fond (28) à l'extrémité de la partie inférieure de canal (1).

12. Système de canal de sol selon la revendication 11, **caractérisé en ce que** l'élément d'accouplement (18) présente sur au moins un côté une paroi latérale (30) dans laquelle est ménagé un trou oblong (21).

13. Système de canal de sol selon l'une des revendications précédentes, **caractérisé en ce que** l'extrémité du système de canal est fermée avec une plaque terminale (22) qui peut être emboîtée, au moyen de languettes (25) formées sur celle-ci, sur le fond (28) à l'extrémité de la partie inférieure de canal (1) et qui peut être adaptée au revêtement de sol par un bord de revêtement réglable en hauteur.

14. Système de canal de sol selon l'une des revendications précédentes, **caractérisé en ce qu'**un angle plat (31) est prévu comme coin intérieur et coin extérieur, dans lequel le rail support de systèmes (7) peut être emboîté des deux côtés dans différentes positions au moyen de languettes (9) formées sur le fond (28) de la partie inférieure de canal (1).

15. Système de canal de sol selon l'une des revendications précédentes, **caractérisé en ce que** des encoches (32) servant de repère pour le vissage des rails réglables en hauteur (10, 2, 5) sont ménagées sur le dessus de la paroi latérale (27) de la partie inférieure de canal (1).
